(19) Europäisches Patentamt
European Patent Office
Office européen des brevets

(11) Numéro de publication : **0 072 308 B2**

(12) **NOUVEAU FASCICULE DE BREVET EUROPÉEN**

(45) Date de publication du nouveau fascicule du brevet : **20.09.89**

(51) Int. Cl.$^4$ : **C 09 K 5/04**

(21) Numéro de dépôt : **82401447.6**

(22) Date de dépôt : **30.07.82**

# (54) Méthode de fonctionnement d'une pompe à chaleur à compression utilisant un hydrocarbure chloro-fluore ayant une stabilité thermique accrue.

(30) Priorité : **11.08.81 FR 8115664**

(43) Date de publication de la demande : **16.02.83 Bulletin 83/07**

(45) Mention de la délivrance du brevet : **18.09.85 Bulletin 85/38**

(45) Mention de la décision concernant l'opposition : **20.09.89 Bulletin 89/38**

(84) Etats contractants désignés : **AT BE CH DE GB IT LI NL SE**

(56) Documents cités :
**DE-A- 2 801 340**
**DE-A- 2 832 237**
**US-A- 2 393 304**
**ISO/DIS 817 (30.8.1979) p. 1-3**
**DIN 8962 (08.1968) p. 1-3**

(73) Titulaire : **INSTITUT FRANCAIS DU PETROLE**
**4, Avenue de Bois-Préau**
**F-92502 Rueil-Malmaison (FR)**

(72) Inventeur : **Denis, Jacques**
**Les Chênes 18, Chemin Grandes Bruyères**
**F-69260 Charbonnieres Les Bains (FR)**
Inventeur : **Weill, Jérôme**
**16, route des Tourelles**
**F-69005 Lyon (FR)**
Inventeur : **Rojey, Alexandre**
**29,33 rue Henri Régnault**
**F-92380 Garches (FR)**

**EP 0 072 308 B2**

Jouve, 18, rue St-Denis, 75001 Paris, France

## Description

L'invention concerne une méthode de fonctionnement d'une pompe à chaleur à compression utilisant certains hydrocarbures chloro-fluorés comme fluides de transfert de chaleur à des niveaux de température relativement élevés.

La nécessité de récupérer au mieux les différents rejets thermiques conduit à développer des cycles thermodynamiques opérant avec des fluides organiques. Les rejets thermiques peuvent être valorisés en particulier, au moyen de pompes à chaleur à compression, qui permettent de produire de la chaleur à plus haut niveau thermique.

Parmi les produits commerciaux, on a jusqu'à présent retenu, pour leurs caractéristiques thermodynamiques intéressantes, certains hydrocarbures chloro-fluorés, tels que ceux répondant aux formules $CF_3—CCl_2—CF_3$ (F-216), $CF_2Cl—CFCl_2$ (F-113) et $CF_2Cl—CF_2Cl$ (F-114).

Par ailleurs, le brevet US-A-2 393 304 décrit une méthode de préparation d'un hydrocarbure chlorofluoré de formule $CHF_2—CClF_2$ (F-124), qui peut être utilisé comme réfrigérant, particulièrement pour les compresseurs de type rotatif. La température critique est d'environ 127 °C. Il ne peut donc être utilisé avec un bon rendement à des niveaux thermiques élevés.

On rappelle que les hydrocarbures fluorés sont désignés habituellement par un nombre généralement de 3 chiffres, (précédé de la lettre F ou R), codifié comme suit :

Le premier chiffre représente le nombre total d'atomes de carbone diminué d'une unité (ce chiffre n'est pas mentionné lorsqu'il est égal à 0 ; 0 correspond dans ce cas à 1 atome de carbone) ;

Le deuxième chiffre représente le nombre total d'atomes d'hydrogène augmenté d'une unité ;

Le troisième chiffre représente le nombre d'atomes de fluor.

Cependant, le développement des installations, visant à valoriser les rejets thermiques (pompes à chaleur) dans le secteur industriel, ainsi que la recherche de performances accrues conduisent à mettre en jeu des températures relativement élevées.

Les problèmes auxquels on se heurte alors résident dans le fait que les fluides organiques tels que les hydrocarbures chloro-fluorés préconisés jusqu'à présent se décomposent en général sous l'effet de la chaleur et des métaux, en présence des lubrifiants utilisés dans les parties mécaniques des pompes à chaleur, même lorsque ces lubrifiants ont été choisis parmi les meilleurs produits de synthèse, tels par exemple que les oligomères d'oléfines ou certains alkylbenzènes.

On a maintenant découvert que certains hydrocarbures chloro-fluorés présentaient une stabilité suffisante pour être utilisés dans les installations fonctionnant à des températures élevées sans que l'on observe les inconvénients précités. Les températures d'utilisation sont par exemple supérieures à 80 °C.

Les hydrocarbures chloro-fluorés utilisables comme fluides de transfert de chaleur dans l'invention, peuvent être définis d'une manière générale en ce qu'ils contiennent :

2 ou 3 atomes de carbone par molécule, un atome d'hydrogène par molécule, au moins un atome de chlore par molécule et au plus un atome de chlore par atome de carbone, chacune des valences restantes (sur les atomes de carbone de la molécule) étant occupée par un atome de fluor.

Ils doivent en outre présenter une température critique d'un niveau suffisant pour pouvoir être utilisés dans les installations fonctionnant à des températures élevées.

Ainsi, on retient dans l'invention les hydrocarbures chloro-fluorés présentant une température critique d'au moins environ 140 °C.

Si l'on adopte les conventions classiques, les hydrocarbures chloro-fluorés que nous considérons plus particulièrement sont ceux que l'on désigne par les références : F-226, F-123$^a$, F-225 et F-224.

Leurs températures critiques sont respectivement de 163, 184, 221 et 282 °C (valeurs calculées par corrélation). Ces hydrocarbures chloro-fluorés sont utilisables avantageusement dans des pompes à chaleur à compression pour des températures de condensation d'au moins 100 °C.

Plus particulièrement, le cycle considéré peut opérer avec une température de vaporisation d'environ 80 °C (ou davantage) et une température de condensation d'environ 120 °C (ou davantage).

Les hydrocarbures chloro-fluorés les plus intéressants, compte tenu de leurs propriétés thermodynamiques, sont le F-226 et le F-123$^a$, la préférence allant toutefois à ce dernier.

Ces hydrocarbures chloro-fluorés peuvent être obtenus par substitution d'un atome d'hydrogène à un atome de chlore dans une molécule d'hydrocarbure chloro-fluoré qui comporte deux atomes de chlore sur le même atome de carbone. Ainsi, les composés référencés F-123$^a$, 224, 225 et 226 peuvent être préparés respectivement à partir des hydrocarbures chloro-fluorés F-113, 214, 215 et 216, par chauffage en présence d'un ou de plusieurs hydrocarbures liquides et de fer utilisé comme catalyseur. Il semble que la réaction de transformation fait appel à un mécanisme radicalaire, qui pourrait être représenté par le schéma suivant :

$$R^1—CCl_2—R^2 \longrightarrow R^1—\dot{C}Cl—R^2 + Cl^\bullet$$

$$Cl^\bullet + RH \longrightarrow HCl + R^\bullet$$

$$R^1—\dot{C}Cl—R^2 + RH \longrightarrow R^1—CHCl—R^2 + R^\bullet$$

$$R^\bullet + R^\bullet \longrightarrow R — R$$

où

$R^1$ représente un radical $CF_3$— ou $CF_2Cl$—

$R^2$ représente un atome F ou un radical $CF_3$— ou $CF_2Cl$—

et

R représente un radical hydrocarboné.

Les exemples suivants illustrent l'invention.

## Exemple 1

On prépare l'hydrocarbure fluoré désigné par F-123$^a$ et répondant à la formule $CF_2Cl—CHFCl$ en chauffant à 200 °C en présence de fer comme catalyseur et au contact d'une huile hydrocarbonée, l'hydrocarbure fluoré F-113 de formule $CF_2Cl—CFCl_2$.

Le produit obtenu (F-123$^a$) est alors chauffé à 200 °C, en présence d'une éprouvette de fonte, au contact d'une huile consistant en un polydécène ayant une viscosité à 100 °C de 39 mm²/s, dans une ampoule scellée, pendant 7 jours.

On soumet au même traitement un échantillon du produit F-113 et l'on compare les caractéristiques des produits obtenus après l'essai, (voir tableau I ci-après).

Tableau I

| Caractéristiques après l'essai / Hydrocarbure fluoré | F 123a | F 113 |
|---|---|---|
| Pureté du fluide (%) | 98 | 78 |
| Indice d'acide du fluide (mg KOH/g) | 0 | 105 |
| Aspect de l'huile | CLAIRE | NOIRE |
| Indice d'acide de l'huile (mg KOH/g) | 0 | 8 |
| Aspect de l'éprouvette de fonte | pas altéré | forte attaque |

Le produit F-123$^a$ présente une excellente stabilité thermique malgré la présence d'atomes de chlore dans sa molécule.

Il présente en outre des caractéristiques thermodynamiques telles qu'il peut être utilisé avantageusement comme fluide de transfert de chaleur à un haut niveau de température.

Ainsi, sa température d'ébullition est de 28 °C et sa température critique est de 184 °C. Ces caractéristiques permettent de l'utiliser avantageusement en remplacement du F-114 couramment utilisé dans les pompes à chaleur à compression pour des températures de condensation relativement élevées, c'est-à-dire atteignant ou dépassant 100 °C.

Par exemple, on pourra l'utiliser avantageusement dans un cycle opérant avec une température de vaporisation de 80 °C et une température de condensation de 120 °C.

Le tableau II ci-dessous montre les caractéristiques de fonctionnement auxquelles on aboutit pour une pompe à chaleur équipée d'un compresseur alternatif lubrifié entraîné par un moteur électrique, et la manière dont elles se comparent aux caractéristiques de fonctionnement obtenues avec le F-114 et la même pompe à chaleur.

Tableau II

| | F-123a | F-114 |
|---|---|---|
| Pression d'aspiration (atm) | 4,66 | 9,20 |
| Pression de refoulement (atm) | 11,71 | 20,90 |
| Coefficient de performance | 5,01 | 4,08 |

On observe que l'utilisation du F-123 permet un gain important sur le coefficient de performance (défini par le rapport de la puissance thermique fournie par la pompe à chaleur sur la puissance électrique consommée par le moteur d'entraînement), et conduit à des valeurs satisfaisantes de la pression d'aspiration et de la pression de refoulement (pressions supérieures à la pression atmosphérique mais plus basses que dans le cas du F-114).

Exemple 2

On prépare l'hydrocarbure chloro-fluoré désigné par F-226, et répondant à la formule $CF_3—CHCl—CF_3$ en chauffant à 200 °C, en présence de fer comme catalyseur et au contact d'une huile hydrocarbonée, l'hydrocarbure fluoré F-216 de formule $CF_3—CCl_2—CF_3$.

Le produit obtenu (F-226) est alors chauffé à 200 °C en présence d'une éprouvette de fonte, au contact d'une huile consistant en un polydécène ayant une viscosité à 100 °C de 39 $mm^2/s$, dans une ampoule scellée, pendant 7 jours.

On soumet au même traitement un échantillon du produit F-216 et l'on compare les propriétés des produits obtenus après l'essai (voir tableau III ci-après).

Tableau III

| Caractéristiques après l'essai \ Hydrocarbure fluoré | F 226 | F 216 |
|---|---|---|
| Pureté de fluide (%) | 96 | 1 |
| Indice d'acide du fluide (mg KOH/g) | 0 | 210 |
| Aspect de l'huile | CLAIRE | NOIRE |
| Indice d'acide de l'huile (mg KOH/g) | 0 | 10 |
| Aspect de l'éprouvette de fonte | pas altéré | dépôt noir |

Ces résultats confirment la grande différence de stabilité thermique entre le produit hydrogéné monochloré et le produit dichloré.

Les caractéristiques thermodynamiques du produit F-226 sont au moins aussi bonnes que celles du F-216, et il peut être utilisé avantageusement comme fluide de transfert de chaleur à un haut niveau de température.

Ainsi, sa température d'ébullition est de 24 °C et sa température critique de 163 °C. Il peut être utilisé de manière avantageuse pour des cycles de pompes à chaleur à compression dans lesquels la température de condensation atteint ou dépasse 100 °C.

Si par exemple on l'utilise dans un cycle opérant avec une température de vaporisation de 80 °C et une température de condensation de 120 °C, on obtient les caractéristiques de fonctionnement suivantes, avec la même pompe à chaleur que dans l'exemple précédent, qui sont comparées, dans le tableau ci-dessous, aux caractéristiques de fonctionnement obtenues avec le F-114.

Tableau IV

| | F-226 | F-114 |
|---|---|---|
| Pression d'aspiration (atm) | 5,3 | 9,2 |
| Pression de refoulement (atm) | 12,7 | 20,9 |
| Coefficient de performance | 4,57 | 4,08 |

Le gain sur le coefficient de performance résultant de l'utilisation du F-226 par rapport au F-114 est également important dans ce cas. Le volume spécifique à l'aspiration qui est pour le F-226 de 268 l/kg est inférieur au volume spécifique à l'aspiration obtenu dans le cas du F-123[a], qui est de 364 l/kg, ce qui peut représenter un avantage pour l'utilisation du F-226 par rapport au F-123, le choix final du fluide de travail pour une application donnée devant résulter d'une optimisation globale.

## Revendications

1. Méthode de fonctionnement d'une pompe à chaleur à compression utilisant la vaporisation et la condensation d'un fluide de transfert de chaleur consistant en au moins un hydrocarbure chloro-fluoré, la température de condensation dudit fluide dans ladite pompe à chaleur étant d'au moins 100 °C, ladite méthode étant caractérisée en ce que ledit hydrocarbure chlorofluoré renferme dans sa molécule 2 ou 3 atomes de carbone, un atome d'hydrogène, au moins 1 atome de chlore par molécule et au plus 1 atome de chlore par atome de carbone, et le nombre d'atomes de fluor nécessaire pour saturer les valences restantes, et présentant une température critique d'au moins 140 °C.

2. Méthode selon la revendication 1, caractérisée en ce que ledit hydrocarbure chloro-fluoré est choisi parmi ceux que l'on désigne par F-226, F-123[a], F-225 et F-224.

3. Méthode selon la revendication 2, caractérisée en ce que ledit hydrocarbure chloro-fluoré est le F-226, qui répond à la formule

$$CF_3—CHCl—CF_3$$

4. Méthode selon la revendication 2, caractérisée en ce que ledit hydrocarbure chloro-fluoré est le F-123[a], qui répond à la formule

$$CF_2Cl—CHFCl.$$

5. Méthode selon l'une des revendications 1 à 4 dans laquelle la température de vaporisation dudit fluide est d'au moins environ 80 °C et sa température de condensation est d'au moins environ 120 °C.

## Claims

1. A method of operating a compression heat pump involving the vaporization and the condensation of a heat transfer fluid, consisting in at least on chlorofluorinated hydrocarbon, wherein the condensation temperature of said fluid in said heat pump is at least 100 °C, said method being characterized in heat said chlorofluorinated hydrocarbon contains in its molecule 2 or 3 carbon atoms, on hydrogen atom, at least 1 chlorine atom per molecule and at most 1 chlorine atom per carbon atom, and the number of fluorine atoms necessary to saturate the remaining valences, and having a critical temperature of at least 140 °C.

2. A method according to claim 1, characterized in that said chlorofluorinated hydrocarbon is selected from those designated as F-226, F-123[a], F-225, and F-224.

3. A method according to claim 2, characterized in that said chlorofluorinated hydrocarbon is F-226, conforming to the formula

$$CF_3—CHCl—CF_3$$

4. A method according to claim 2, characterized in that said chlorofluorinated hydrocarbon is F-123[a], conforming to the formula

$$CF_2Cl—CHFCl.$$

5. A method according to one of claims 1 to 4, wherein the vaporization temperature of said fluid is at least about 80 °C and its condensation temperature is at least about 120 °C.

## Patentansprüche

1. Verfahren zum Betrieb einer Kompressionswärmepumpe unter Verwendung der Verdampfung und her Kondensation einer Flüssigkeit zur Wärme-übertratung, die aus mindenstens einem Chlor-Fluor-Kohlenwasserstoff besteht, wobei die Kondensationstemperatur dieser Flüssigkeit in dieser Wärmepumpe mindestens 100 °C beträgt, und wobei dieses Verfahren dadurch gekennzeichnet ist, dass dieser Chlor-Fluor-Kohlenwasserstoff in seinem Molekül 2 oder 3 Kohlenstoffatome, ein Wasserstoffatom, mindenstens ein Chloratom und höchsten ein Chloratom pro Kohlenstoffatom sowie eine ausreichenden Anzahl Fluoratome zur Sättigung der restlichen Valenzen enthält und eine kritische Temperatur von mindestens 140 °C aufweist.

2. Verfahren gemäss Anspruch 1, dadurch gekennzeichnet, dass dieser Chlor-Fluor-Kohlenwasserstoff aus der Gruppe gewählt wird, die man mit F-226, F-123[a], F-225 und F-224 bezeichnet.

3. Verfahren gemäss Anspruch 2, dadurch gekennzeichnet, dass dieser Chlor-Fluor-Kohlenwasserstoff F-226 ist und der folgenden Formel entspricht

$CF_3—CHCl—CF_3$.

4. Verfahren gemäss Anspruch 2, dadurch gekennzeichnet, dass dieser Chlor-Fluor-Kohlenwasserstoff F-123a ist und der folgenden Formel entspricht

$CF_2Cl—CFCl$.

5. Verfahren gemäss Ansprüchen 1 bis 4, dadurch gekennzeichnet, dass die Verdampfungstemperatur dieser Flüssigkeit mindestens etwa 80 °C und die Kondensationstemperatur mindestens etwa 120 °C beträgt.